# EUROPÄISCHE PATENTSCHRIFT

(11) **EP 2 755 815 B1**
(45) Veröffentlichungstag und Bekanntmachung des Hinweises auf die Patenterteilung: **01.02.2017**
(21) Anmeldenummer: 12758775.6
(22) Anmeldetag: 07.09.2012
(51) Int. Cl.: B29C 70/30, B29C 33/42, F03D 1/06, B29C 70/08

(54) **FORM UND VERFAHREN ZUR HERSTELLUNG EINES STEGES UND STEG FÜR EIN ROTORBLATT EINER WINDENERGIEANLAGE**
MOULD AND METHOD FOR PRODUCING A WEB, AND WEB FOR A ROTOR BLADE OF A WIND TURBINE
MOULE ET PROCÉDÉ DE FABRICATION D'UNE ENTRETOISE, ET ENTRETOISE POUR UNE PALE DE ROTOR D'UNE ÉOLIENNE

(30) Priorität: 14.09.2011 DE 102011082664
(43) Veröffentlichungstag der Anmeldung: 23.07.2014
(73) Patentinhaber: Senvion GmbH, 22297 Hamburg (DE)
(72) Erfinder: RICHERS, Tilman, 60314 Frankfurt am Main (DE); BENDEL, Urs, 24787 Fockbek (DE); EYB, Enno, 24116 Kiel (DE)
(74) Vertreter: Seemann & Partner Patentanwälte mbB
(86) Internationale Anmeldenummer: PCT/EP2012/003758
(87) Internationale Veröffentlichungsnummer: WO 2013/037466

(56) Entgegenhaltungen:
- WO-A2-2011/006563
- DE-A1-102009 030 860
- US-A- 843 355
- US-A1- 2008 072 527

## Beschreibung

Die Erfindung betrifft eine Form zur Herstellung eines Stegs für ein Rotorblatt einer Windenergieanlage, die in Längsrichtung des Rotorblatts erstreckt ist, umfassend einen Stegtisch, eine Stegstützfläche und Seitenwände. Die Erfindung betrifft ferner ein Verfahren zur Herstellung eines Stegs für ein Rotorblatt einer Windenergieanlage in einer entsprechenden Form. Schließlich betrifft die Erfindung einen Steg für ein Rotorblatt einer Windenergieanlage, ein Rotorblatt einer Windenergieanlage mit einem entsprechenden Steg sowie eine Windenergieanlage mit einem entsprechenden Rotorblatt.

Die Erfindung betrifft die Herstellung von Stegen für Rotorblätter von Windenergieanlagen. Moderne Windenergieanlagen weisen Rotorblätter mit Längen von 50 m oder mehr auf. Die Rotorblätter sind in einer Schalenbauweise aus einer dünnen aerodynamisch wirksamen Rotorblattschale aus Faserverbundwerkstoffen aufgebaut, die zur Verstärkung und zur Wahrung der aerodynamisch wirksamen Form innenliegende Verstärkungen und Querverstrebungen aufweisen. Dazu gehören die in Längsrichtung des Rotorblatts angeordneten Rotorblattgurte, die aus einer Vielzahl von Lagen von unidirektionalen Fasergelegen aufgebaut sind und die im Betrieb der Windenergieanlage auf das Rotorblatt einwirkende Querkräfte zur Rotorblattwurzel hin ableiten und somit hauptsächlich dafür verantwortlich sind, dass die Kräfte, die durch die Umströmung des Rotorblatts durch die umgebende Luft auf das Rotorblatt einwirken, zu einer Drehung des Rotors der Windenergieanlage führen.

Die aerodynamische Form des Rotorblatts wird in seiner Länge durch einen oder mehrere Stege gewahrt, die die Rotorblattschalenhälften an der Druckseite und an der Saugseite des Rotorblatts miteinander zugfest verbinden und dabei Zugkräfte aufnehmen. So wird verhindert, dass das aerodynamische Querschnittsprofil sich verändert. Der Einfachheit halber wird im Rahme der vorliegenden Erfindung von "Halbschalen" des Rotorblatts gesprochen, weil die Fertigung mit einer Halbschale für die Saugseite und einer Halbschale für die Druckseite üblich ist. Es versteht sich aber, dass die Erfindung auch andere bekannte Ausführungen umfasst, in denen die Rotorblattschale aus mehreren Segmenten zusammengesetzt wird. Es ist auch nicht unbedingt notwendig, dass eine Trennlinie zwischen der Saugseite und der Druckseite an der Profilvorderkante mit einer Trennlinie oder Stoßkante zwischen zwei Schalensegmenten übereinstimmt. Für die Funktion der Gurte und des oder der Stege spielt die Anzahl der verwendeten Segmente nur eine untergeordnete Rolle.

Die Stege von Rotorblättern sind üblicherweise in einer Sandwichbauweise gefertigt, in denen ein Kernmaterial, beispielsweise ein PET-Schaumkern (Polyethylenterephthalat), ein PVC-Schaumkern und/oder ein Kern aus Balsaholz, in Lagen von Faserverbundstoffen eingebettet ist. Die Fasergelege reichen über den Kern des Steges und über die Höhe des Steges hinaus und werden üblicherweise zu einer Seite hin zu einem "L"-förmigen Stegfuß abgewinkelt, so dass der Steg insgesamt eine "C"-Form einnimmt, wobei die abgewinkelten Faserlagen durch flächige Applikation eines Klebstoffes, üblicherweise eines Epoxy-Klebesystems, flächig mit einem Gurt in einer Halbschale des Rotorblatts verbunden wird.

Bei den mittlerweile über 50 m langen Rotorblättern, die derzeit und in Zukunft in Windenergieanlagen verwendet werden, stößt diese Art der Befestigung an ihre Grenzen. Das Kernmaterial der Stege weist eine geringe Steifigkeit auf, während die Gurte in den oberen und unteren Halbschalen des Rotorblatts auf eine hohe Steifigkeit hin ausgelegt sind. Es kommt somit zu einem starken Steifigkeitssprung in dem Materialübergang vom Steg zum Gurt. Dies wirkt sich insbesondere im hochbelasteten Bereich der Rotorblattwurzel und in dem ebenfalls hochbelasteten Übergangsbereich zum aerodynamisch wirksamen Bereich so aus, dass eine erhöhte Gefahr einer Ablösung oder eines Bruchs des Steges von dem Gurt besteht. Insbesondere im Blattwurzelbereich und im blattwurzelnahen Übergangsbereich ist es daher erforderlich, Maßnahmen zu ergreifen, die eine stabilere Verbindung des Steges mit den Rotorblattgurten sicherstellen.

Dies wird im bekannten Stand der Technik derzeit dadurch erreicht, dass im blattwurzelseitigen Übergangsbereich die von den Schenkeln der "C"-Form des Steges abgewandte Seite mit weiteren Faserlagen überlaminiert wird, um die Verbindung zu stärken, so dass sich insgesamt ein "T"-Profil der Stegfüße ergibt. Diese Form der nachträglichen Befestigung ist allerdings prozesstechnisch aufwendig und erfordert Handarbeit im engen Raum des bereits zusammengesetzten Rotorblatts, was zu langen Herstellungsdauern und somit hohen Kosten führt.

Aus DE 10 2009 030 860 A1 ist ein Gerät und ein Verfahren zur Fertigung von Komponenten einer Windenergieanlage bekannt mit einem Unterbau, bei dem an der Oberkante von zumindest einer der Seitenwände zumindest ein starres Bauteil als Rippe angeordnet ist, die über ein elastisches Scharnier mit dem Unterbau verbunden ist und zum Kippen zwischen einer angehobenen, geschlossenen Position und einer abgesenkten, geöffneten Position zum Formen und Entformen der Komponenten betätigbar ist. Damit kann ein Steg mit "L"-förmigen Füßen hergestellt werden.

US 2008/0072527 A1 offenbart ein Verfahren zur Herstellung faserverstärkter Kompositstrukturen, die zunächst aus in Formen eingelegten Prepregs hergestellt und anschließend zu einem größeren Bauteil zusammengefügt werden.

Ausgehend von diesem Stand der Technik ist es Aufgabe der vorliegenden Erfindung, die Herstellung von Stegen, insbesondere für große Rotorblätter, zu vereinfachen und beschleunigen, wobei insbesondere im blattwurzelseitigen Übergangsbereich eine besonders gute und bruchsichere Verbindung zwischen dem Steg und den Gurten eines Rotorblatts gewährleistet sein soll.

Diese Aufgabe wird durch eine Form zur Herstellung eines Stegs für ein Rotorblatt einer Windenergieanlage gelöst, die in Längsrichtung des Stegs erstreckt ist, umfassend einen Stegtisch, eine Stegstützfläche und Seitenwände, die dadurch weitergebildet ist, dass in einem blattwurzelseitigen Übergangsbereich des Rotorblatts wenigstens abschnittsweise an wenigstens einer Seite einer zentralen Stegstützfläche eine Rinne mit einer gegenüber der zentralen Stegstützfläche abgesenkten Seitenfläche ausgebildet ist, die auf der der zentralen Stegstützfläche gegenüberliegenden Seite von einer Seitenwand der Form begrenzt ist, wobei wenigstens ein in Längsrichtung des Stegs erstrecktes Inlay umfasst ist, das im Wesentlichen als Negativ der Form der wenigstens einen Rinne ausgebildet ist, wobei das Inlay insbesondere an einer Oberseite eine periphere Stegstützfläche aufweist, die bei Einsatz des Inlays in die Rinne die zentrale Stegstützfläche zu einer Seitenwand hin verlängert.

Der Grundgedanke der Erfindung liegt darin, dass im blattwurzelseitigen Übergangsbereich oder in einem oder mehreren Abschnitten des Übergangsbereiches die "T"-Form der Stegfüße oder wenigstens eines Stegfußes in einem Schritt direkt in der Stegform erzeugt wird. Dadurch erübrigt sich der nachträgliche Schritt des Überlaminierens mit einer weiteren Faserlage im bereits zusammengefügten Rotorblatt. Im blattwurzelseitigen Übergangsbereich wird der Steg zumindest auf einer Seite oder auf beiden Seiten bereits mit dem entsprechenden "T"-förmigen Stegfuß gefügt und als Ganzes später in ein Rotorblatt zwischen die Gurte in der oberen Halbschale und der unteren Halbschale des Rotorblatts eingesetzt und dort durch Kleben verfügt.

Um die "T"-Form des Stegfußes herstellen zu können, weist die Form zur Herstellung des Steges, die im Stand der Technik im Querschnitt im Wesentlichen eine flache Trogform aufweist, im Querschnitt eine oder zwei abgesenkte Seiten in Form von Rinnen auf. In dieser Form liegt der eigentliche Stegkörper auf einer zentralen Stegstützfläche auf, während die Rinne oder die Rinnen an einer oder beiden Seiten der zentralen Stegstützfläche zusammen mit den Seitenwänden die Räume definieren, in denen "T"-förmige Stegfüße hergestellt werden können. Faserlagen können daher nicht nur, wie herkömmlich, in einer "L"-Form des Stegfußes an der Seitenwand nach oben in der Form verlegt werden, sondern in der gewünschten "T"-Form nach oben und nach unten gegenüber dem waagerecht liegenden zentralen Stegkörper. Die Rinnen bieten somit Platz für jeweils einen Schenkel eines "T"-förmigen Stegfußes. In der Form kann der Steg mit dem oder den "T"-förmigen Stegfüßen dann gefügt werden. Der gefügte Steg wird als Ganzes aus der Form entnommen und kann als Ganzes zwischen die Blattschalenhälften eines Rotorblatts eingesetzt werden. Ein nachträgliches Überlaminieren einer Seite im blattwurzelseitigen Übergangsbereich ist nicht mehr nötig.

Im Rahmen der Erfindung wird unter einem blattwurzelseitigen Übergangsbereich derjenige Bereich verstanden, der sich zwischen der Rotorblattwurzel und dem aerodynamisch wirksamen Teil des Rotorblatts befindet. Dieser Übergangsbereich ist von Rotorblatttyp zu Rotorblatttyp verschieden und ist vorzugsweise so auszulegen, dass der Bereich mit besonders hohen Beanspruchungen in dem Übergang zwischen Steg und Blattgurt umfasst ist, indem die Bruchgefahr der Verbindung zwischen Steg und Blattgurt besonders hoch ist. Der Übergangsbereich ist daher blatttypabhängig zu definieren und entspricht beispielsweise dem Bereich, in dem nach dem Stand der Technik bereits ein Überlaminieren des Stegfußes im Rotorblatt zur Erreichung der "T"-Form stattfindet.

Im blattwurzelseitigen Übergangsbereich hat die erfindungsgemäße Form eine modifizierte Trogform, wobei der Boden des Troges eine gestufte Höhenverteilung aufweist. Der Boden des Troges bzw. der Form hat in einem Schnitt quer zur Längserstreckung des Rotorblatts im Zentrum die übliche Tiefe einer Herstellungsform für Stege und an einer oder beiden Seiten die gegenüber dem Zentrum abgesenkte Bodenfläche bzw. Seitenfläche. Der Boden der Form ist auch als Stegtisch ausgebildet bzw. wird als Stegtisch bezeichnet.

Vorzugsweise endet die wenigstens eine Rinne im weiteren Verlauf der Form in Richtung auf die Blattspitze des Rotorblatts zu und ist im blattspitzenseitigen Bereich der Form als eine Stegstützfläche mit einheitlichem Höhenverlauf ausgebildet, wobei insbesondere der Übergang zwischen dem Bereich mit Rinnen und dem Bereich mit einheitlichem Höhenverlauf stufig oder mit einer rampenartigen Verringerung der Rinnentiefe verläuft. Diese Maßnahme beschreibt den Übergang aus dem blattwurzelseitigen Übergangsbereich, in dem "T"-förmige Stegfüße geformt werden, in den weiteren, aerodynamischen wirksamen Bereich des Rotorblatts, wo die übliche "C"-Form des Steges mit "L"-förmigen Stegfüßen ausreicht. Dieser restliche Bereich nimmt üblicherweise den deutlich größeren Teil der Längserstreckung des Rotorblatts ein. Unter einem einheitlichen Höhenverlauf wird im Rahmen der Erfindung insbesondere eine Ebene verstanden, da der Hauptkörper des Steges üblicherweise flach ist. Leichte Wellenformen und insbesondere abgerundete Kanten an den Seitenwänden sind in einigen Fällen ebenfalls vorteilhaft. In Längsrichtung des Rotorblatts folgt die Form einer gewünschten Biegung des Rotorblatts, so dass der darin gefertigte Steg sich in die Form des Rotorblatts vollständig einfügt.

Da die Form der Stegfüße der Form der Gurte bzw. Blattschalen folgt, sind die Seitenwände wenigstens abschnittsweise schräg gestellt. Damit der gefügte Steg aus der Form entnommen werden kann, sind in einem solchen Fall die Seitenwände so aufgestellt, dass die Öffnung an der Oberkante der Seitenränder größer ist als die Breite der Form am Boden. In dieser nach oben offenen Form kann der gefügte Steg einfach entnommen werden, ohne dass die Seitenwände entfernt werden müssen.

Um auch die in den Rinnen angeordneten Schenkel der "T"-förmigen Stegfüße im blattwurzelseitigen Übergangsbereich trotz ihres Hinterschnitts zusammen mit dem Steg aus der Form entnehmen zu können, ist in erfindungsgemäß wenigstens ein in Längsrichtung des Rotorblatts erstrecktes Inlay umfasst, das im Wesentlichen als Negativ der Form der wenigstens einen Rinne ausgebildet ist, wobei das Inlay insbesondere an einer Oberseite eine periphere Stegstützfläche aufweist, die bei Einsatz des Inlays in die Rinne die zentrale Stegstützfläche zu einer Seitenwand hin verlängert. Dies bedeutet, dass die Rinne breiter ist als für den Stegfuß eigentlich notwendig und dass das Inlay zunächst zusammen mit dem gefügten Steg aus der Form herausgenommen wird, da es sich in den spitzen Winkel des geneigten "T"-förmigen Stegfußes einfügt und erst nachträglich entnommen wird. Das Inlay kann auch in Längsrichtung der Rinne segmentiert sein.

Vorzugsweise weist die wenigstens eine Rinne und/oder das wenigstens eine Inlay im Querschnitt im Wesentlichen eine Rechteckform oder im Wesentlichen eine Trapezform auf, wobei insbesondere die kürzere der beiden parallelen Seiten der Trapezform am Boden der Rinne angeordnet ist. Dies bedeutet, dass die Rinne bzw. das Inlay oben breiter ist als am Boden und somit ohne Probleme das Inlay aus der Rinne wieder entfernt werden kann. Ausdrücklich ist hierbei der Fall umfasst, dass die Trapezform eine Rechteckform oder eine Quadratform ist. Hierbei handelt es sich geometrisch um Spezialfälle einer Trapezform. Die Form des Inlays sollte in jedem Fall so gewählt sein, dass es in einer Rinne platzierbar ist, ohne zu verrutschen, wobei das Inlay nicht notwendigerweise an jedem Ort entlang der Längsachse des Rotorblatts die gleiche Form wie die Rinne aufweisen muss. Außerdem ist das Inlay in Bezug auf die Rinne so geformt, dass nach dem Einsetzen in die Rinne wenigstens ein Spalt für einen Schenkel des "T"-förmigen Stegfußes verbleibt.

Die Oberseite eines Inlays ist vorzugsweise in einer Ebene mit der zentralen Stegstützfläche angeordnet, wenn das Inlay in einer Rinne angeordnet ist, und verlängert die zentrale Stegstützfläche als periphere Stegstützfläche zu einer Seitenwand hin.

Die der Erfindung zugrunde liegende Aufgabe wird auch durch ein Verfahren zur Herstellung eines Stegs für ein Rotorblatt einer Windenergieanlage in einer zuvor beschriebenen, erfindungsgemäßen Form mit den folgenden Schritten gelöst:
- im blattwurzelseitigen Übergangsbereich wird wenigstens eine erste Faserlage an eine Seitenwand der Form gelegt, die bis zum Boden der wenigstens einen Rinne reicht,
- wenigstens eine zweite Faserlage und/oder wenigstens eine zweite Faserlagenanordnung wird zusammen mit einem Inlay in die Rinne eingesetzt, wobei die zweite Faserlage und/oder die zweite Faserlagenanordnung im Wesentlichen bis zum Boden der Rinne reicht und über eine Seitenwand des Inlays und die periphere Stegstützfläche des Inlays sowie über die zentrale Stegstützfläche gelegt wird,

- ein Kernmaterial des Stegs wird auf die zweite Faserlage aufgelegt,
- wenigstens eine dritte Faserlage und/oder wenigstens eine dritte Faserlagenanordnung wird auf das Kernmaterial des Stegs aufgelegt, wobei wenigstens ein über das Kernmaterial überstehender Teil der dritten Faserlage und/oder der dritten Faserlagenanordnung nach oben hin an die erste Faserlage an der Seitenwand angelegt wird,
- der Steg wird durch Injizieren und/oder Aushärten eines Harzes oder eines Klebematerials in die und/oder in den Faserlagen verbunden und ausgehärtet.

Das Verbleiben und Aushärten wird auch als "Fügen" bezeichnet. Dieses erfindungsgemäße Verfahren führt zur Herstellung eines Steges, der im blattwurzelseitigen Übergangsbereich eine gefügte "T"-förmige Stegfußgeometrie aufweist. Unter dem Begriff "Faserlage" wird im Rahmen der Erfindung "wenigstens eine Faserlage" verstanden, es können also auch mehrere Faserlagen oder Fasergelege als Faserlagen erfindungsgemäß eingesetzt werden. Hierbei handelt es sich üblicherweise zur Verkleidung des Steges um sogenannte "Biax" Fasergelege, also Fasergelege mit Fasern, die in verschiedenen Richtungen, beispielsweise ± 45° ausgerichtet sind. Es kann sich aber auch um eine oder mehrere unidirektionale Fasergelege handeln, wobei die unidirektionalen Fasergelege insbesondere in unterschiedliche Richtungen ausgerichtet sind. Als Kernmaterial kommen beispielsweise PET-Schaumstoff, PVC-Schaumstoff oder Balsaholz in Frage. Das Fügen des Steges erfolgt durch bekannte Verfahren, beispielsweise das Harz-Infusionsverfahren ("resin injection molding"), bei dem in die trockenen Fasergelege in der Form flüssiges Harz unter Druck eingebracht wird und anschließend ausgehärtet wird. Alternativ können bereits mit Harz vorgetränkte Faserlagen, sogenannte "prepregs", verwendet werden, die anschließend miteinander verfügt werden.

Die Nummerierung der Faserlagen als erste, zweite oder dritte Faserlage entspricht ihrer Anordnung in der Form, an einer der Seitenflächen, unter oder über dem Kernmaterial. Das Kernmaterial ist bezüglich seines Querschnitts durch die ersten, zweiten und dritten Fasermaterialien nach der Herstellung des Steges vollständig umschlossen und bildet an seinen Enden im blattwurzelseiten Übergangsbereich die "T"-förmigen Stegfüße aus. Erfindungsgemäß können eine oder mehrere durchgehende zweite oder dritte Faserlagen von einem Ende eines Stegfußes über die Stegfläche bzw. das Kernmaterial bis zum Ende des gegenüberliegenden Stegfußes reichen.

Alternativ oder zusätzlich hierzu wird eine zweite und/oder dritte Faserlagenanordnung erfindungsgemäß verwendet, wobei als zweite Faserlagenanordnung und/oder als dritte Faserlagenanordnung eine Anordnung von Faserlagen in die Form eingelegt wird, die wenigstens eine zentrale Faserlage sowie eine oder mehrere periphere Faserlagen umfasst, wobei die zentrale Faserlage der Anordnung das Kernmaterial bedeckt, wobei die Faserlage oder die Faserlagen jeweils eine Hälfte eines "T"-förmigen Stegfußes bilden und die zentrale Faserlage und/oder das Kernmaterial wenigstens teilweise überlappen.

Die zentrale Faserlage überdeckt die Stegfläche, also das Kernmaterial. Sie kann auch teilweise oder vollständig einen oder beide Stegfüße überlappen bzw. bedecken, also im Extremfall eine oben beschriebene durchgehende Faserlage bilden. Die periphere Faserlage oder peripheren Faserlagen bilden die Stegfüße und überlappen die zentrale Faserlage, insbesondere auch einen Teil des Kernmaterials. Sie bilden eine Verlängerung und/oder eine Verstärkung der zentralen Faserlage an den Stegfüßen. Auf diese Weise werden die Stegfüße und ihre Anbindung an die Stegfläche verstärkt. Solche peripheren Faserlagen können in einer zweiten Faserlagenanordnung vorzugsweise zuerst mit den Inlays in die Form eingesetzt werden und anschließend die zentrale Faserlage aufgelegt werden. Auf die so gebildete Faserlagenanordnung kann das Kernmaterial aufgelegt werden. Die Bildung der dritten Faserlagenanordnung folgt entsprechend so, dass zunächst die zentrale Faserlage oder Faserlagen auf das Kernmaterial aufgelegt werden und anschließend die peripheren Faserlagen überlappend eingelegt werden.

Vorzugsweise wird ein Raum, der im Bereich einer "T"-förmigen Blattwurzel zwischen der ersten Faserlage sowie der zweiten oder dritten Faserlage oder der zweiten oder dritten Faserlagenanordnung einerseits und einer Kante des Kernmaterials andererseits, die insbesondere sich verjüngend oder abgerundet ausgebildet ist, mit einem Füllmaterial aufgefüllt wird, wobei insbesondere ein Elastizitätsmodul des Füllmaterials ähnlich einem Elastizitätsmodul des verwendeten Klebstoffes oder Harzes ist. Diese Räume entstehen durch die Biegung der Stegkante bzw. der Faserlagen an den Punkten, an denen die Stegfläche in die "T"-förmigen Stegfüße übergehen. Das Füllmaterial stabilisiert diesen Übergang und sorgt insbesondere mit dem entsprechend ausgewählten Elastizitätsmodul für einen möglichst gleichmäßigen Übergang der Steifigkeit zwischen einem harten Blattgurt und dem weichen Kernmaterial des Steges. Der Elastizitätsmodul weicht vorzugsweise um weniger als 50%, weiter vorzugsweise um weniger als 20% vom Elastizitätsmodul des Harzes oder Klebstoffes ab.

Vorzugsweise ist oder wird das Füllmaterial vorgefertigt, bevor es in die Form eingelegt wird, insbesondere aus Holz, Sperrholz, Kleberpaste, mit Kurzfasern gefülltem Kunstharz und/oder aus mit Kunstharz getränkten Langfasergewirken oder Langfasergeflechten. Die Hohlräume können alternativ auch mit Klebstoff oder Harz ausgefüllt werden.

Die so zu füllenden Räume weisen im Wesentlichen eine Dreiecksform auf, die zwischen den Faserlagen und dem Kernmaterial ausgebildet wird. Eine Seite des Füllmaterials schmiegt sich dabei vorzugsweise an das Kernmaterial an, das in einer bevorzugten Ausführungsform einen Halbkreisbogen beschreibt, während eine zweite Seite des Füllmaterials einen Bogen ausbildet. Dabei weist die bogenförmige zweite Seite des Füllmaterials vorzugsweise einen Radius von 30% bis 100%, insbesondere von 30% bis 70%, der Summe der Dicken des Kernmaterials und der zweiten und dritten Faserlagen auf. Dieser Bogen bestimmt im Wesentlichen den Krümmungsradius der entsprechenden zweiten bzw. dritten Faserlage oder Faserlagenanordnung.

In einer vorteilhaften Weiterbildung des Verfahrens wird im blattspitzenseitigen Bereich des Rotorblatts zunächst wenigstens eine erste Faserlage an die Seitenwände und die Stegstützfläche angelegt, ein Kernmaterial des Stegs auf die erste Faserlage aufgelegt und anschließend wenigstens eine zweite Faserlage auf das Kernmaterial und an den Seitenwänden auf die erste Faserlage aufgelegt. Auf diese Weise wird die in dem aerodynamisch wirksamen Bereich des Rotorblatts bekannte "C"-Form des Steges erzeugt.

Vorteilhafterweise wird auf wenigstens einer Fläche des Stegs, auf die im weiteren Fertigungsprozess eines Rotorblatts laminiert werden soll, insbesondere auf einen oder mehrere Stegfüße, zwischen den Seitenwänden und den Faserlagen wenigstens eine Lage Abreißgewebe platziert. Ein Abreißgewebe kann aus einem Kunststoffgewebe bestehen, etwa aus geflochtenen oder gewebten Polyethylen-Fasern, das in die entsprechende Oberfläche mit einlaminiert wird. Vor dem Einkleben in das Rotorblatt wird das Abreißgewebe abgerissen. Dadurch entsteht eine aufgeraute Struktur, die unter anderem aufgrund der vergrößerten Klebefläche und der Rauheit der Oberfläche das Verkleben begünstigt. Außerdem werden durch das Abreißen die langen Molekülketten im Harz gebrochen, so dass diese sich mit den Molekülen im Klebstoff verbinden können, so dass die Verklebung auch auf molekularer Ebene verstärkt wird. Diese Vorgehensweise stellt eine Alternative zum Schleifen der Oberflächen dar.

Vorzugsweise wird nach dem Verbinden und Aushärten des Stegs in der Form der Steg zunächst mit dem wenigsten einen Inlay aus der Form herausgenommen und anschließend das Inlay aus dem Steg entfernt.

Die der Erfindung zugrunde liegende Aufgabe wird auch durch einen Steg für ein Rotorblatt einer Windenergieanlage gelöst, mit einer in einer Sandwichbauweise aus einem Kernmaterial, das von Faserlagen umgeben ist, gebildeten Stegfläche, mit wenigstens einem Stegfuß, der in einem blattwurzelseitigen Übergangsbereich des Rotorblatts wenigstens abschnittsweise im Wesentlichen "T"-förmig ausgebildet ist und in einem blattspitzenseitigen Bereich des Rotorblatts wenigstens abschnittsweise "L"-förmig ausgebildet ist, insbesondere herstellbar oder hergestellt in einer oben beschriebenen, erfindungsgemäßen Form, insbesondere in einem oben beschriebenen, erfindungsgemäßen Verfahren. Hierbei handelt es sich um ein einstufiges Verfahren, da der Steg die kombinierte Stegfußform bereits vor dem Einsetzten in das Rotorblatt aufweist.

Der erfindungsgemäße Steg weist im besonders beanspruchten blattwurzelseitigen Übergangsbereich eine gefügte "T"-förmige Stegfußgeometrie auf, die eine besonders sichere Verbindung mit einem steifen Gurt eines Rotorblatts erlaubt, und die in ihrer Stabilität und Steifigkeit einem "T"-förmigen Stegfuß, der durch einseitiges Überlaminieren erzeugt ist, überlegen ist.

Der erfindungsgemäße Steg wird vorteilhafterweise dadurch verbessert, dass das Kernmaterial im blattwurzelseitigen Übergangsbereich des Rotorblatts an wenigstens einer in einem "T"-förmig ausgebildeten Stegfuß endenden Seite eine sich verjüngende und/oder abgerundete Stegkante aufweist, die insbesondere einen Radius aufweist, der im Wesentlichen einer halben Dicke des Kernmaterials entspricht. Die abgerundete oder schmaler werdende Geometrie der Kante des Kernmaterials, die dem Material des steifen Rotorblattgurtes am nächsten liegt, bietet den Vorteil, dass derjenige Bereich des Stegfußes, der nicht durch das weiche Kernmaterial eingenommen wird, durch ein härteres bzw. steiferes Material ersetzt wird. Die Verjüngung führt somit zu einem Steifigkeitsgradienten, mit dem die geringe Steifigkeit des Kernmaterials in Richtung auf das steife Blattgurtmaterial kontinuierlich wächst. Dieser Steifigkeitsgradient vermeidet die Probleme einer stufenförmigen Steifigkeitsverteilung mit der damit verbundenen Bruchgefahr und vermindert die Bruchgefahr der Verbindung zwischen Steg und Blattgurt noch einmal deutlich.

Vorzugsweise ist die sich verjüngende und/oder abgerundete Stegkante mit wenigstens einer Lage Fasermaterial umgeben, insbesondere mit einer gleichen Anzahl Faserlagen und/oder einem gleichen Gelegetyp wie das Kernmaterial.

Die der Erfindung zugrunde liegende Aufgabe wird auch durch ein Rotorblatt einer Windenergieanlage mit einem erfindungsgemäßen, zuvor beschriebenen Steg sowie durch eine Windenergieanlage mit einem erfindungsgemäßen, zuvor beschriebenen Rotorblatt gelöst.

Die zu den einzelnen Erfindungsgegenständen, d.h. der Form, dem Verfahren, dem Steg, dem Rotorblatt und der Windenergieanlage, genannten Eigenschaften, Merkmale und Vorteile gelten ohne Einschränkung auch für die jeweils anderen Erfindungsgegenstände, die sich aufeinander beziehen.

Weitere Merkmale der Erfindung werden aus der Beschreibung erfindungsgemäßer Ausführungsformen zusammen mit den Ansprüchen und den beigefügten Zeichnungen ersichtlich. Erfindungsgemäße Ausführungsformen können einzelne Merkmale oder eine Kombination mehrerer Merkmale erfüllen.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: eine schematische Darstellung einer Draufsicht auf ein Rotorblatt,
- Fig. 2: eine schematische Schnittdarstellung durch ein Rotorblatt gemäß Fig. 1,
- Fig. 3: eine schematische Schnittdarstellung durch eine Herstellungsform für einen Steg nach dem Stand der Technik,
- Fig. 4: eine schematische Schnittdarstellung durch eine Stegfußanbindung nach dem Stand der Technik,
- Fig. 5: eine weitere schematische Schnittdarstellung durch eine Stegfußanbindung nach Stand der Technik,
- Fig. 6: eine schematische Schnittdarstellung durch eine erfindungsgemäße Form und
- Fig. 7: eine weitere schematische Schnittdarstellung durch die erfindungsgemäße Form gemäß Fig. 6.

In den Zeichnungen sind jeweils gleiche oder gleichartige Elemente und/oder Teile mit denselben Bezugsziffern versehen, so dass von einer erneuten Vorstellung jeweils abgesehen wird.

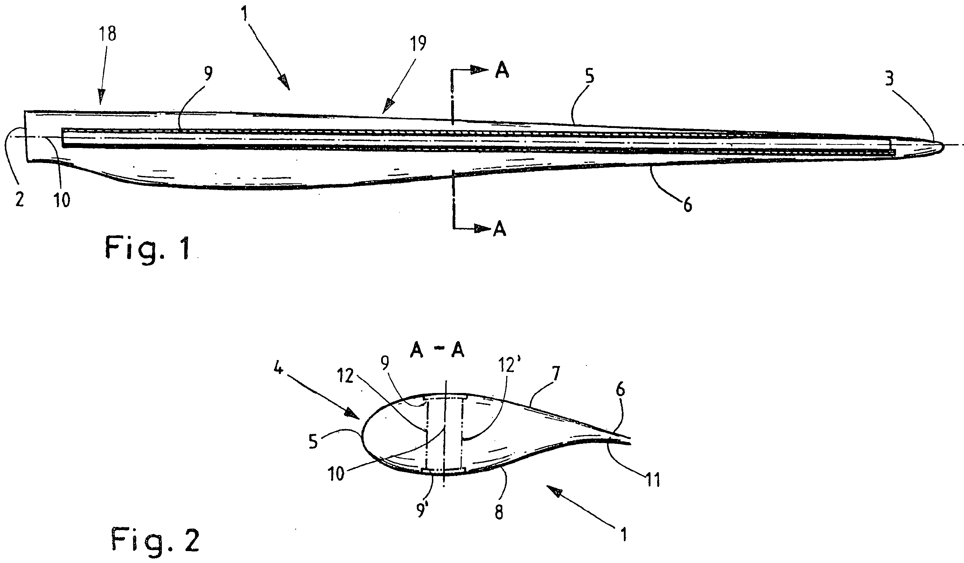

In Fig. 1 ist ein Rotorblatt 1 in einer Draufsicht schematisch dargestellt. Das Rotorblatt 1 erstreckt sich von einer Rotorblattwurzel 2 zu einer Rotorblattspitze 3 und weist eine Vorderkante 5 und eine Hinterkante 6 auf. Die Hinterkante 6 wird üblicherweise durch Besäumen erzeugt. Ebenfalls in Fig. 1 dargestellt ist ein Gurt 9, der sich in der Längserstreckung des Rotorblatts 1 erstreckt und der zur Stabilisierung des Rotorblatts 1 dient. Der Gurt 9 nimmt auf das Rotorblatt 1 einwirkende Kräfte und Biegemomente auf und leitet sie zur Blattwurzel 2 bzw. zur Rotornabe weiter. Der Gurt 9 liegt auf einer Längsschnittebene 10, die sich vom Zentrum der Rotorblattwurzel 2 bis zur Rotorblattspitze 3 erstreckt.

Das Rotorblatt 1 ist in Längsrichtung unterteilt in einen rotorwurzelseitigen Übergangsbereich 18 und einen blattspitzenseitigen Bereich 19, der den aerodynamischen wirksamen Bereich darstellt. Die im blattspitzenseitigen Bereich 19 durch aerodynamisch wirkende Kräfte auftretenden Verbiegungen des Rotorblatts 1 werden über den Gurt 9 in den Übergangsbereich 18 zur Rotorblattwurzel 2 übertragen, wobei das Rotorblatt 1 im Übergangsbereich 18 aerodynamisch weniger wirksam ist, jedoch die Belastung sämtlicher Komponenten des Rotorblatts 1 wegen der kumulierten, vor allem durch den Gurt 9 übertragenen Kräfte besonders groß ist. Dementsprechend sind die Schalen, Gurte und andere Komponenten im Übergangsbereich 18 deutlich stärker und dicker ausgelegt als im blattspitzenseitigen Bereich 19. Besteht das Rotorblatt 1 im blattspitzenseitigen Bereich 19 in seiner Schale teilweise nur aus wenigen Lagen von Fasermaterial, so besteht die Schale im Übergangsbereich 18 hingegen aus einer Vielzahl von Faserlagen. Entsprechendes gilt für die Dicke des Gurtes 9, der im Übergangsbereich 18 am dicksten ist und dessen Dicke im blattspitzenseitigen Bereich 19 in Richtung auf die Blattspitze 3 hin abnimmt.

In Fig. 2 ist das Rotorblatt 1 aus Fig. 1 in einer Schnittdarstellung entlang einer Schnittlinie A-A in dem blattspitzenseitigen Bereich 19 aus Fig. 1 schematisch dargestellt. Die Vorderkante 5 und die Hinterkante 6 sind über eine Druckseite 7 und eine Saugseite 8 miteinander verbunden, die zusammen das Querschnittsprofil 4 des Rotorblatts 1 erzeugen. Es ist in Fig. 2 nicht dargestellt, dass das Querschnittsprofil 4 aus mehreren Schaltenteilen, beispielsweise zwei Halbschalen für die Druckseite 7 und die Saugseite 8, hergestellt ist. An der Hinterkante 6 liegen die Schalenteile der Druckseite 7 und der Saugseite 8 im Wesentlichen flächig aufeinander auf und schließen einen Verbindungsbereich 11 ein, der zur Verbindung der Schalenteile und zur Herstellung der Hinterkante 6 mit einem Klebstoff, beispielsweise einem Harz, gefüllt wird.

An der Druckseite 7 und der Saugseite 8 sind im Innenraum des Rotorblatts 1 Hauptgurte 9, 9' angebracht, die das Rotorblatt stabilisieren. Ebenfalls in Fig. 2 dargestellt ist die Längsschnittebene 10, die in Fig. 1 bereits dargestellt war. Diese verläuft quer zu einer Verbindungslinie oder Sehne zwischen der Vorderkante 5 und der Hinterkante 6 des Rotorblatts 1 und erstreckt sich von der Rotorblattwurzel 2 bis zur Rotorblattspitze 3. Zwischen den Hauptgurten 9, 9' sind zwei Stege 12, 12' angeordnet, die die Saugseite 8 mit der Druckseite 7 verbinden und dafür sorgen, dass sich das aerodynamische Profil 4 im Betrieb nicht ändert.

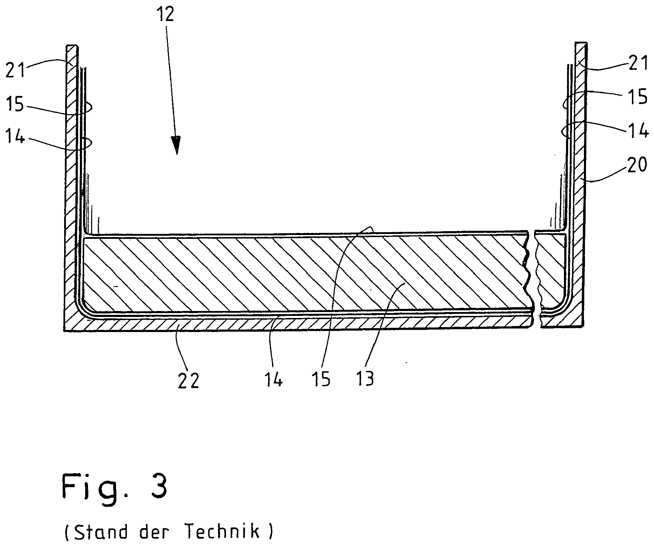

In Fig. 3 ist schematisch im Querschnitt eine aus dem Stand der Technik bekannte Form 20 dargestellt, die eine Trogform mit Seitenwänden 21 und einen glatten, ebenen Boden 22 aufweist. Die Seitenwände 21 können auch, anders als in Fig. 3 dargestellt, schräg angeordnet sein, wobei der Abstand der Seitenwände am oberen Ende der Seitenwände 21 größer sein sollte als die Breite des Bodens 22.

In der Form 20 ist ein Steg 12 angeordnet, der einen zentralen Kernkörper aus einem Kernmaterial 13 aufweist, beispielsweise aus PET-Schaum, PVC-Schaum oder aus Balsaholz. Das Kernmaterial 13 ist eingeschlossen in eine Faserlage 14, die entlang der beiden Seitenwände 21 und über den Boden 22 der Form 20 verläuft, sowie eine weitere Faserlage 15, die an den Seitenwänden 21 parallel mit der ersten Faserlage 14 verläuft und auf der gegenüberliegenden Seite des Kernmaterials 13 verläuft, so dass das Kernmaterial 13 von den beiden Faserlagen 14, 15 eingeschlossen ist. In der Form 20 wird der im Querschnitt dargestellte Steg 12 gefügt und kann anschließend zwischen die Oberseite und die Unterseite eines Rotorblatts zwischen zwei Gurten 9 eingesetzt werden.

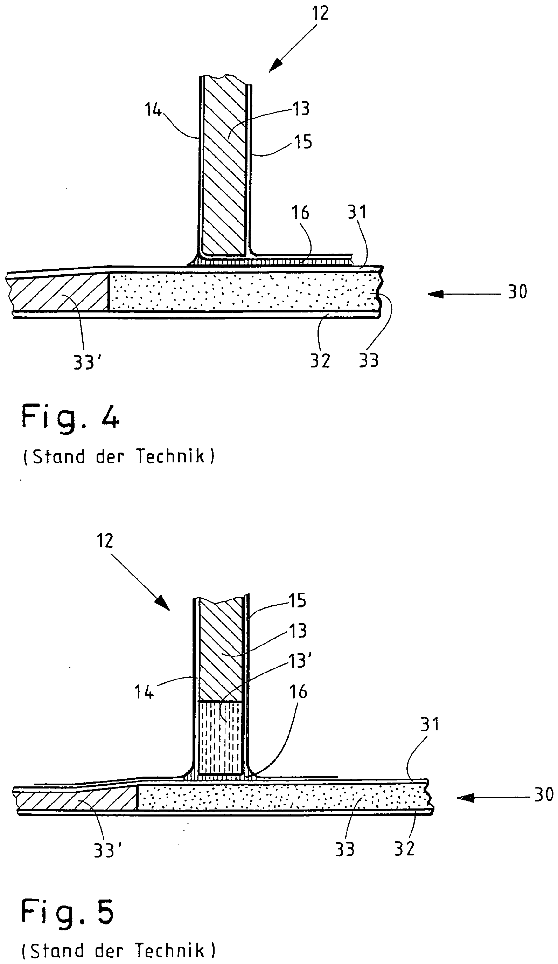

In den Fig. 4 und 5 sind zwei schematische Querschnittsdarstellungen von Verbindungen von Stegfüßen mit einem Gurt in einer Rotorblattschale nach dem Stand der Technik dargestellt. In Fig. 4 handelt es sich um eine herkömmliche Anwendung eines Steges 12 im aerodynamisch wirksamen blattspitzenseitigen Bereich 19 eines Rotorblatts 1. In diesem Bereich ist der Steg 12 so hergestellt, wie dies in Fig. 3 gezeigt ist, und umfasst ein Kernmaterial 13, das von zwei Faserlagen 14, 15 umschlossen ist. Der Stegfuß im unteren Teil des Steges 12 weist eine "L"-förmige Geometrie auf.

Der Stegfuß ist flächig mit einem Klebstoff 16, beispielsweise einem Epoxy-System, mit einem Gurt 33 in einer Blattschale verbunden, der eine hohe Steifigkeit aufweist und zwischen zwei Faserlagen 31, 32 eingebettet ist. Jenseits des Gurtes 33, der in die Blattschale integriert ist, setzt sich der Kern der Blattschale mit einem Kernmaterial 33' fort, beispielsweise Balsaholz oder ein PET-Schaum oder PVC-Schaum oder ein anderes, leichtgewichtiges Material.

In Fig. 5 ist der gleiche Steg 12 und seine Anbindung an den Gurt 33 in der Blattschale 30 wie in Fig. 4, allerdings im blattwurzelseitigen Übergangsbereich 18 dargestellt. An dieser Stelle weist der Steg 13 im Bereich des Stegfußes als weiteres Kernmaterial 13' einen Balsaholzkern auf, der, vom Stegfuß abgewandt, in ein Kernmaterial 13, beispielsweise einen PET-Schaumstoff, übergeht. Der "L"-förmige Stegfuß ist in diesem Bereich auf der in Fig. 5 links dargestellten Seite mit einer weiteren Faserlage 14 nachträglich überlaminiert. Die Verklebung mit einem Klebstoff 16 erfolgt in dem Bereich, in dem der Stegfuß auf dem Gurt 30 bzw. der Faserlage 31 aufliegt.

Der Übergang vom Kernmaterial 13' zum Kernmaterial 13 stellt einen abgestuften Steifigkeitsgradienten dar, da das Balsaholz eine höhere Steifigkeit aufweist als der PET-Schaum. Der abgestufte Steifigkeitsgradient, der einen sanfteren Übergang der Steifigkeit vom Material des Gurtes 33 zum Kernmaterial 13 schafft, wird erkauft mit der Einfügung einer weiteren Grenzfläche zwischen zwei Kernmaterialien 13, 13' im Steg 12. Eine solche Grenzfläche ist im Betrieb auch eine potentielle Bruchstelle.

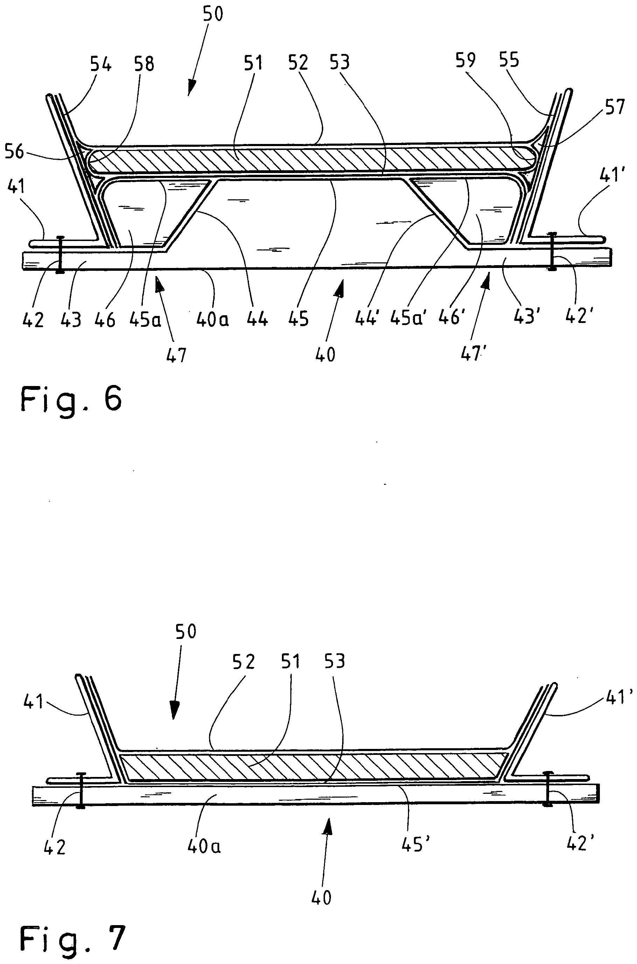

In den Fig. 6 und 7 sind zwei schematische Querschnitte durch eine erfindungsgemäße Form 40 und einen erfindungsgemäßen Steg 50 gezeigt, mit denen die oben gezeigten Nachteile überwunden werden. Dabei zeigt die Fig. 6 einen Schnitt im blattwurzelseitigen Übergangsbereich 18 des Rotorblatts 1 und Fig. 7 einen Schnitt im blattspitzenseitigen Bereich 19.

In Fig. 6 basiert die Form 40 auf einem Stegtisch 40a, der im Zentrum eine zentrale Stegstützfläche 45 aufweist, auf dem der Hauptkörper des Steges 50 aufliegt. Zu beiden Seiten der zentralen Stegstützfläche 45 ist die Dicke des Stegtisches 40a reduziert, so dass sich seitliche abgesenkte Stegtischteile 43, 43' an beiden Seiten anschließen. Auf diesen abgesenkten Seitenflächen sind mittels Verbindungen 42, 42' abgeschrägte Seitenwände 41, 41' angeordnet, deren Neigung der geplanten Neigung der Gurte im Rotorblatt folgt.

Zwischen den Seitenwänden 41, 41' und der zentralen Stegstützfläche 45 sind somit Rinnen 47, 47' angeordnet, die Platz schaffen für die in der Form 40 nach unten zeigenden Schenkel der "T"-förmigen Stegfüße des Steges 50. In den Rinnen 47, 47' sind jeweils im Wesentlichen trapezförmige Inlays 46, 46' dargestellt, die die Höhe der Rinnen 47, 47' aufweisen und sich in die Rinnen 47, 47' einfügen. Die Oberseiten der Inlays 46, 46' bilden periphere Stegstützflächen 45a, 45a', die die zentrale Stegstützfläche 45 zu beiden Seiten hin fast bis zu der jeweiligen Seitenwand 41, 41' verlängern. Tatsächlich hören die peripheren Stegstützflächen 45a, 45a' kurz vor der jeweiligen Seitenwand 41, 41' auf, damit die Faserlagen einem sicheren Krümmungsradius folgen können.

Der Steg 50 in der Form 40 ist so aufgebaut, dass zunächst jeweils eine Faserlage 54, 55 an die schräg gestellten Seitenwände 41, 41' angelegt werden. In einer praktikablen Vorgehensweise wird anschließend eine Faserlage 53 auf die peripheren Stützflächen 45a, 45a' der Inlays 46, 46' aufgelegt und um die abgerundeten Kanten, die nach außen weisen, herumgelegt, wo sie bis zu den Enden der Außenflächen der Inlays 46, 46' reichen. Die Inlays 46, 46' mit der Faserlage 53 werden anschließend in die Rinnen 47, 47' der Form 40 eingesetzt, so dass die seitlichen Enden der Faserlage 53 parallel und berührend mit den Faserlagen 54, 55 an den Seitenwänden 41, 41' angeordnet sind. Die Faserlage 53 liegt außerdem bündig auf den peripheren Stegstützflächen 45a, 45a' und der zentralen Stegstützfläche 45 auf. Zusätzlich können auch weitere periphere Faserlagen in die Rinnen 47, 47' eingelegt sein oder werden, die den Stegfuß stabilisieren und wenigstens bis zur Stegfläche, also zum Kernmaterial 51 reichen. Alternativ kann anstelle der Faserlage 53 auch eine Faserlagenanordnung aus einer zentralen Faserlage in der Stegfläche und peripheren Faserlagen in den Rinnen 47, 47' verwendet werden.

Auf die Faserlage 53 wird das Kernmaterial 51 des Steges 50 aufgelegt und anschließend eine weitere Faserlage 52 auf das Kernmaterial 51 aufgelegt. Die Faserlage 52 ist so geschnitten, dass sie über das Kernmaterial 51 hinausragt. Sie wird an den Seitenflächen 41, 41' auf die dort bereits positionierte Faserlage 54, 55 aufgelegt. Auch diese Faserlage 52 kann durch periphere Faserlagen verstärkt werden oder durch eine Faserlagenanordnung ersetzt werden, bei der eine zentrale Faserlage auf das Kernmaterial aufgelegt wird und an den Stegfüßen durch periphere Faserlagen verlängert wird.

Anschließend kann der Steg 50 mit dem Kernmaterial 51 und den Faserlagen 52 bis 55 gefügt werden, beispielsweise in einem Harzinfusionsverfahren oder durch Verschieben und Aushärten von als "prepregs" ausgeführten Faserlagen.

Schließlich wird der gefügte Steg 50 zusammen mit den Inlays 46, 46' aus der Form herausgenommen und die Inlays 46, 46' entfernt. Die Form der Inlays 46, 46' stellt sicher, dass der Steg 50 aus der Form 40 entnommen werden kann, da die Grenzfläche bei dem Stegtisch zur zentralen Stegstützfläche 45 hin und der Inlays 46, 46' als Schräge 44, 44' gestaltet ist. Im Extremfall darf diese Grenzfläche auch senkrecht stehen, sie darf jedoch nicht nach außen kippend schräg ausgestaltet sein, weil ein solcher Hinterschnitt ein Entnehmen des Steges 50 aus der Form 40 verhindern würde.

Ebenfalls ist in Fig. 6 dargestellt, dass das Kernmaterial 51 an den Rändern, d.h. im Bereich der Stegfüße, abgerundete oder sich verjüngende Stegkanten 58, 59 aufweist. Die nach außen hin verlaufende Verjüngung des weichen Kernmaterials 51 bewirkt einen Steifigkeitsgradienten in Richtung auf die Stegfüße bzw. das Gurtmaterial hin und verhindert somit eine abrupte Änderung der Steifigkeit im Rotorblatt. Die damit einhergehende Bruchgefahr wird vermindert. Die abgerundeten Stegkanten 58, 59 führen dazu, dass in dem "T"-förmigen Stegfuß zu beiden Seiten der abgerundeten Stegkanten 58, 59 Hohlräume entstehen. Diese sind mit Füllmaterial gefüllt, also entweder während der Herstellung des Steges 50 mit Klebstoff oder Harz ausgefüllt worden oder mit einem vorgefertigten Füllmaterial, beispielsweise aus Holz, Sperrholz, Kleberpaste, mit Kurzfasern gefülltem Kunstharz und/oder aus mit Kunstharz getränkten Langfasergewirken oder Langfasergeflechten, die insbesondere jeweils ein ähnliches Elastizitätsmodul wie Harz aufweisen.

In Fig. 7 ist ein weiterer schematischer Querschnitt durch die erfindungsgemäße Form 40 und den Steg 50 gemäß Fig. 6 dargestellt, allerdings im aerodynamisch wirksamen blattspitzenseitigen Bereich 19 des Rotorblatts 1. An dieser Stelle erhält der Steg 50 im Wesentlichen eine bekannte "C"-Form. Hierfür ist der Stegtisch 40a über die gesamte Breite flach ausgestaltet, mit einer flach verlaufenden Stegstützfläche 45', auf der sowohl die Seitenwände 41, 41' als auch die Faserlagen 52, 53 und das Kernmaterial 51 des Stegs 50 aufliegen. Der zentrale Teil des Stegs 50 weist in seinem Verlauf keine Stufe auf. Daher entspricht die Höhe der Stegstützfläche 45' in Fig. 7 der Fortsetzung der Höhe der zentralen Stegstützfläche 45 aus Fig. 6. Es ist die Tiefe der Rinnen 47, 47', die sich im Verlaufe der Längsausdehnung des Rotorblatts ändert, da die Rinnen 47, 47' am Ende des Übergangsbereiches 18 enden. Dies kann in einer abrupten Stufe geschehen oder in Form eines rampenförmigen Verlaufes.

Wie in Fig. 7 erkennbar ist, sind im blattspitzenseitigen Bereich 19 die Stegfüße "L"-förmig ausgeführt, wobei die Faserlagen 52, 53, die das Kernmaterial 51 umschließen, an beiden Seitenwänden 41, 41' doppellagig aneinander geführt sind. Es wird an dieser Stelle keine weitere Faserlage 54, 55 mehr eingesetzt, wie dies in Fig. 6 im blattwurzelseitigen Übergangsbereich 18 noch der Fall war.

Alle genannten Merkmale, auch die den Zeichnungen allein zu entnehmenden sowie auch einzelne Merkmale, die in Kombination mit anderen Merkmalen offenbart sind, werden allein und in Kombination als erfindungswesentlich angesehen. Erfindungsgemäße Ausführungsformen können durch einzelne Merkmale oder eine Kombination mehrerer Merkmale erfüllt sein.

### Bezugszeichenliste

- 1: Rotorblatt
- 2: Rotorblattwurzel
- 3: Rotorblattspitze
- 4: Querschnittsprofil
- 5: Profilvorderkante
- 6: Profilhinterkante
- 7: Druckseite
- 8: Saugseite
- 9: Hauptgurt Druckseite
- 9': Hauptgurt Saugseite
- 10: Längsschnittebene
- 11: Verbindungsbereich Hinterkante
- 12, 12': Steg
- 13, 13': Kernmaterial
- 14, 15: Faserlage
- 16: Klebstoff
- 18: Übergangsbereich
- 19: blattspitzenseitiger Bereich
- 20: Form
- 21: Seitenwand
- 22: Boden
- 30: Blattschale
- 31, 32: Faserlage
- 33: Gurt
- 33': Kernmaterial
- 40: Form
- 40a: Stegtisch
- 41, 41': Seitenwand
- 42, 42': Verbindung
- 43, 43': seitliches Stegtischteil
- 44, 44': Schräge
- 45: zentrale Stegstützfläche
- 45': Stegstützfläche
- 45a, 45': periphere Stegstützfläche
- 46, 46': Inlay
- 47, 47': Rinne
- 50: Steg
- 51: Kernmaterial
- 52, 53: Faserlage
- 54, 55: seitliche Faserlage
- 56, 57: Füllmaterial
- 58, 59: abgerundete Stegkante

## Patentansprüche

1. Form (40) zur Herstellung eines Stegs (50) für ein Rotorblatt (1) einer Windenergieanlage, die in Längsrichtung des herzustellenden Stegs (50) erstreckt ist, umfassend einen Stegtisch (40a), eine Stegstützfläche (45) und Seitenwände (41, 41'), **dadurch gekennzeichnet, dass** in einem blattwurzelseitigen Übergangsbereich (18) des Rotorblatts (1) wenigstens abschnittsweise an wenigstens einer Seite einer zentralen Stegstützfläche (45) eine Rinne (47, 47') mit einer gegenüber der zentralen Stegstützfläche (45) abgesenkten Seitenfläche (43, 43') ausgebildet ist, die auf der der zentralen Stegstützfläche (45) gegenüberliegenden Seite von einer Seitenwand (41, 41') der Form (40) begrenzt ist, wobei wenigstens ein in Längsrichtung des Stegs (50) erstrecktes Inlay (46, 46') umfasst ist, das im Wesentlichen als Negativ der Form der wenigstens einen Rinne (47, 47') ausgebildet ist, wobei das Inlay (46, 46') insbesondere an einer Oberseite eine periphere Stegstützfläche (45a, 45a') aufweist, die bei Einsatz des Inlays (46, 46') in die Rinne (47, 47') die zentrale Stegstützfläche (45) zu einer Seitenwand (41, 41') hin verlängert.

2. Form (40) nach Anspruch 1, **dadurch gekennzeichnet, dass** die wenigstens eine Rinne (47, 47') im weiteren Verlauf der Form (40) in Richtung auf die Blattspitze (3) des Rotorblatts (1) zu endet und im blattspitzenseitigen Bereich (19) der Form (40) eine Stegstützfläche (45') mit einheitlichem Höhenverlauf ausgebildet ist, wobei insbesondere der Übergang zwischen dem Bereich mit Rinnen (47, 47') und dem Bereich mit einheitlichem Höhenverlauf stufig oder mit einer rampenartigen Verringerung der Rinnentiefe verläuft.

3. Form (40) nach Anspruch 1 oder 2, **dadurch gekennzeichnet, dass** die wenigstens eine Rinne (47, 47') und/oder das wenigstens eine Inlay (46, 46') im Querschnitt im Wesentlichen eine Rechteckform oder im Wesentlichen eine Trapezform aufweist, wobei insbesondere die kürzere der beiden parallelen Seiten der Trapezform am Boden der Rinne (47, 47') angeordnet ist.

4. Verfahren zur Herstellung eines Stegs (50) für ein Rotorblatt (1) einer Windenergieanlage in einer Form (40) nach einem der Ansprüche 1 bis 3, mit den folgenden Schritten:
- im blattwurzelseitigen Übergangsbereich (18) wird wenigstens eine erste Faserlage (54, 55) an eine Seitenwand (41, 41') der Form gelegt, die bis zum Boden der wenigstens einen Rinne (47, 47') reicht,
- wenigstens eine zweite Faserlage (53) und/oder wenigstens eine zweite Faserlagenanordnung wird zusammen mit einem Inlay (46, 46') in die Rinne eingesetzt, wobei die zweite Faserlage (53) und/oder die zweite Faserlagenanordnung im Wesentlichen bis zum Boden der Rinne (47, 47') reicht und über eine Seitenwand des Inlays (46, 46') und die periphere Stegstützfläche (45a, 45a') des Inlays (46, 46') sowie über die zentrale Stegstützfläche (45) gelegt wird,
- ein Kernmaterial (51) des Stegs (50) wird auf die zweite Faserlage (53) aufgelegt,
- wenigstens eine dritte Faserlage (52) und/oder wenigstens eine dritte Faserlagenanordnung wird auf das Kernmaterial (51) des Stegs (50) aufgelegt, wobei wenigstens ein über das Kernmaterial (51) überstehender Teil der dritten Faserlage (52) und/oder der dritten Faserlagenanordnung nach oben hin an die erste Faserlage (54, 55) an der Seitenwand (41, 41') angelegt wird,
- der Steg (50) wird durch Injizieren und/oder Aushärten eines Harzes oder eines Klebematerials in die und/oder in den Faserlagen (52 - 55) verbunden und ausgehärtet.

5. Verfahren nach Anspruch 4, **dadurch gekennzeichnet, dass** als zweite Faserlage (53) und/oder die dritte Faserlage (52) eine durchgängige Faserlage (52, 53) in die Form (40) eingelegt wird, und/oder dass als zweite Faserlagenanordnung und/oder als dritte Faserlagenanordnung eine Anordnung von Faserlagen in die Form (40) eingelegt wird, die wenigstens eine zentrale Faserlage sowie eine oder mehrere periphere Faserlagen umfasst, wobei die zentrale Faserlage der Anordnung das Kernmaterial (51) bedeckt, wobei die Faserlage oder die Faserlagen jeweils eine Hälfte eines "T"-förmigen Stegfußes bilden und die zentrale Faserlage und/oder das Kernmaterial wenigstens teilweise überlappen.

6. Verfahren nach Anspruch 4 oder 5, **dadurch gekennzeichnet, dass** ein Raum, der im Bereich einer "T"-förmigen Blattwurzel zwischen der ersten Faserlage (54, 55) sowie der zweiten oder dritten Faserlage (52, 53) oder der zweiten oder dritten Faserlagenanordnung einerseits und einer Kante des Kernmaterials (51) andererseits, die insbesondere sich verjüngend oder abgerundet ausgebildet ist, mit einem Füllmaterial (56, 57) aufgefüllt wird, wobei insbesondere ein Elastizitätsmodul des Füllmaterials (56, 57) ähnlich einem Elastizitätsmodul des verwendeten Klebstoffes oder Harzes ist.

7. Verfahren nach Anspruch 6, **dadurch gekennzeichnet, dass** das Füllmaterial (56, 57) vorgefertigt ist oder wird, bevor es in die Form (40) eingelegt wird, insbesondere aus Holz, Sperrholz, Kleberpaste, mit Kurzfasern gefülltem Kunstharz und/oder aus mit Kunstharz getränkten Langfasergewirken oder Langfasergeflechten, oder dass der Raum mit einem Klebstoff oder Harz ausgefüllt wird.

8. Verfahren nach einem der Ansprüche 4 bis 7, **dadurch gekennzeichnet, dass** im blattspitzenseitigen Bereich (19) des Rotorblatts (1) zunächst wenigstens eine erste Faserlage (53) an die Seitenwände (41, 41') und die Stegstützfläche (45') angelegt wird, ein Kernmaterial (51) des Stegs (50) auf die erste Faserlage (53) aufgelegt wird und anschließend wenigstens eine zweite Faserlage (52) auf das Kernmaterial (51) und an den Seitenwänden (41, 41') auf die erste Faserlage (53) aufgelegt wird.

9. Verfahren nach einem der Ansprüche 4 bis 8, **dadurch gekennzeichnet, dass** nach dem Verbinden und Aushärten des Stegs (50) in der Form (40) der Steg (50) zunächst mit dem wenigsten einen Inlay (46, 46') aus der Form (40) herausgenommen wird und anschließend das Inlay (46, 46') aus dem Steg (50) entfernt wird.

10. Steg (50) für ein Rotorblatt (1) einer Windenergieanlage, mit einer in einer Sandwichbauweise aus einem Kernmaterial (51), das von Faserlagen (52, 53) umgeben ist, gebildeten Stegfläche, mit wenigstens einem Stegfuß, der in einem blattwurzelseitigen Übergangsbereich (18) des Rotorblatts (1) wenigstens abschnittsweise im Wesentlichen "T"-förmig ausgebildet ist und in einem blattspitzenseitigen Bereich (19) des Rotorblatts (1) wenigstens abschnittsweise zu wenigstens einer Seite hin "L"-förmig ausgebildet ist, herstellbar oder hergestellt in einer Form (40) nach einem der Ansprüche 1 bis 3, insbesondere in einem Verfahren nach einem der Ansprüche 5 bis 10.

11. Steg (50) nach Anspruch 10, **dadurch gekennzeichnet, dass** das Kernmaterial (51) im blattwurzelseitigen Übergangsbereich (18) des Rotorblatts an wenigstens einer in einem "T"-förmig ausgebildeten Stegfuß endenden Seite eine sich verjüngende und/oder abgerundete Stegkante (58, 59) aufweist, die insbesondere einen Radius aufweist, der im Wesentlichen einer halben Dicke des Kernmaterials (51) entspricht.

12. Steg (50) nach Anspruch 11, **dadurch gekennzeichnet, dass** die sich verjüngende und/oder abgerundete Stegkante (58, 59) mit wenigstens einer Lage Fasermaterial umgeben ist, insbesondere mit einer gleichen Anzahl Faserlagen und/oder einem gleichen Gelegetyp wie das Kernmaterial (51).

13. Rotorblatt (1) einer Windenergieanlage mit einem Steg (50) nach Anspruch 11 oder 12.

14. Windenergieanlage mit einem Rotorblatt (1) nach Anspruch 13.

## Claims

1. A mould (40) for producing a web (50) for a rotor blade (1) of a wind turbine, which extends in the longitudinal direction of the web (50) to be produced, comprising a web table (40a), a web support surface (45) and side walls (41, 41'), **characterized in that**, in a blade-root-side transition area (18) of the rotor blade (1) at least in sections on at least one side of a central web support surface (45), a groove (47, 47') is designed with a lateral surface (43, 43') lowered with respect to the central web support surface (45), which is delimited on the side located opposite the central web support surface (45) by a side wall (41, 41') of the mould (40), wherein at least one inlay (46, 46') extending in the longitudinal direction of the web (50) is included, which is essentially designed as a negative of the mould of at least one groove (47, 47'), wherein the inlay (46, 46') has a peripheral web support surface (45a, 45a') in particular on a top side, which extends the central web support surface (45) towards a side wall (41,41') during insertion of the inlay (46, 46') into the groove (47, 47').

2. The mould (40) according to claim 1, **characterized in that** the at least one groove (47, 47') ends in the further progression of the mould (40) in the direction towards the blade tip (3) of the rotor blade (1) and a web support surface (45') with a uniform height progression is formed in the blade-tip-side area (19) of the mould (40), wherein in particular the transition between the area with grooves (47, 47') and the area with uniform height progression progresses in stages or with a ramp-like reduction of the groove depth.

3. The mould (40) according to claim 1 or 2, **characterized in that** the at least one groove (47, 47') and/or the at least one inlay (46, 46') has essentially a rectangular shape or essentially a trapezoidal shape in cross-section, wherein in particular the shorter of the two parallel sides of the trapezoidal shape is arranged on the floor of the groove (47, 47').

4. A method for producing a web (50) for a rotor blade (1) of a wind turbine in a mould (40) according to one of claims 1 to 3, with the following steps:
- in the blade-root-side transition area (18), at least one first fibre layer (54, 55) is placed on a side wall (41, 41') of the mould, which reaches to the floor of the at least one groove (47, 47'),
- at least one second fibre layer (53) and/or at least one second fibre layer arrangement is inserted into the groove together with an inlay (46, 46'), wherein the second fibre layer (53) and/or the second fibre layer arrangement reaches essentially to the floor of the groove (47, 47') and is placed over a side wall of the inlay (46, 46') and the peripheral web support surface (45a, 45a') of the inlay (46, 46') as well as over the central web support surface (45),
- a core material (51) of the web (50) is placed on the second fibre layer (53),
- at least one third fibre layer (52) and/or at least one third fibre layer arrangement is placed on the core material (51) of the web (50), wherein at least one part of the third fibre layer (52) and/or of the third fibre layer arrangement protruding over the core material (51) abuts upward against the first fibre layer (54, 55) on the side wall (41, 41'),
- the web (50) is connected and cured through injection and/or curing of a resin or an adhesive material into and/or in the fibre layers (52 - 55).

5. The method according to claim 4, **characterized in that** a continuous fibre layer (52, 53) is placed into the mould (40) as the second fibre layer (53) and/or the third fibre layer (52), and/or **in that** an arrangement of fibre layers is placed into the mould (40) as the second fibre layer arrangement and/or as the third fibre layer arrangement, which comprises at least one central fibre layer as well as one or more peripheral fibre layers, wherein the central fibre layer of the arrangement covers the core material (51), wherein the fibre layer or the fibre layers respectively each form a half of a "T"-shaped web foot and the central fibre layer and/or the core material overlap at least partially.

6. The method according to claim 4 or 5, **characterized in that** a space is filled with a filler material (56, 57) in the area of a "T"-shaped blade root between the first fibre layer (54, 55) and the second or third fibre layer (52, 53) or the second or third fibre layer arrangement on one side and an edge of the core material (51) on the other side, which is designed in particular in a tapering or rounded manner, wherein in particular an elasticity module of the filler material (56, 57) is similar to an elasticity module of the used adhesive or resin.

7. The method according to claim 6, **characterized in that** the filler material (56, 57) is or will be prefabricated before it is placed in the mould (40), **in that** it is made in particular of wood, plywood, adhesive paste, artificial resin filled with short fibres and/or long fibre knit fabric or long fibre mesh saturated with artificial resin, or **in that** the space is filled with an adhesive or resin.

8. The method according to one of claims 4 to 7, **characterized in that** at least one first fibre layer (53) is first placed against the side walls (41, 41') and the web support surface (45') in the blade-tip-side area (19) of the rotor blade (1), a core material (51) of the web (50) is placed on the first fibre layer (53) and then at least one second fibre layer (52) is placed on the core material (51) and on the side walls (41, 41') on the first fibre layer (53).

9. The method according to one of claims 4 to 8, **characterized in that**, after the connection and curing of the web (50) in the mould (40), the web (50) with the at least one inlay (46, 46') is first removed from the mould (40) and the inlay (46, 46') is then removed from the web (50).

10. A web (50) for a rotor blade (1) of a wind turbine, with a central web part designed in a sandwich construction made of a core material (51) which is surrounded by fibre layers (52, 53), with at least one web foot which is designed in an essentially "T"-shaped manner at least in sections in a blade-root-side transition area (18) of the rotor blade (1) and is designed in an "L"-shaped manner at least in sections at least towards one side in a blade-tip-side area (19) of the rotor blade (1), producible or produced in a mould (40) according to one of claims 1 to 3, in particular in a method according to one of claims 5 to 10.

11. The web (50) according to claim 10, **characterized in that** the core material (51) has a tapering or rounded web edge (58, 59) in the blade-root-side transition area (18) of the rotor blade on at least one side ending in a "T"-shaped web foot, which has in particular a radius which essentially corresponds to half the thickness of the core material (51).

12. The web (50) according to claim 11, **characterized in that** the tapering and/or rounded web edge (58, 59) is surrounded by at least one layer of fibre material, in particular with the same number of fibre layers and/or the same layer type as the core material (51).

13. A rotor blade (1) of a wind turbine with a web (50) according to claim 11 or 12.

14. A wind turbine with a rotor blade (1) according to claim 13.

## Revendications

1. Moule (40) destiné à produire une web (50) pour une pale de rotor (1) d'une éolienne, qui s'étend selon la direction longitudinale de la web (50) produite, comprenant un support (40a) de la web, une surface (45) de support de la web et des parois latérales (41, 41'), **caractérisé en ce que**, dans une zone de transition (18) latérale de la racine de pale de la pale de rotor (1), au moins en partie sur au moins un côté d'une surface centrale (45) de support de la web, une rainure (47, 47') est formée avec une surface latérale abaissée (43, 43') par rapport à la surface centrale (45) de support de la web et est limitée sur le côté opposé à la surface centrale (45) de support de la web d'une paroi latérale (41, 41') d'un moule (40), lequel comprend au moins un insert (46, 46') allongé dans la direction longitudinale de la web (50), dans lequel est aménagée sensiblement la forme négative de la forme de ladite au moins une rainure (47, 47'), l'insert (46, 46') comprenant, en particulier sur un côté supérieur, une surface périphérique (45a, 45a') de support de la web, qui, lors de l'utilisation de l'insert (46, 46') dans la rainure (47, 47'), allonge la surface centrale (45) de la web supportant une paroi latérale (41,41').

2. Moule (40) selon la revendication 1, **caractérisé en ce que** ladite au moins une rainure (47, 47') se termine dans la suite du moule (40) dans la direction de la pointe de pale (3) de la pale de rotor (1), et **en ce que**, dans la zone du côté des extrémités (19) du moule (40), une traverse-surface de soutien (45') est formée avec une hauteur uniforme, dans lequel, en particulier, la transition entre la zone avec des rainures (47, 47') et la zone avec une hauteur uniforme se poursuit par paliers ou par une réduction de la profondeur des rainures en forme de rampe.

3. Moule (40) selon la revendication 1 ou la revendication 2, **caractérisé en ce que** ladite au moins une rainure (47, 47') et / ou ledit au moins un insert (46, 46') présente une forme sensiblement rectangulaire ou une forme sensiblement trapézoïdale en section transversale, le plus court des deux côtés parallèles de la forme trapézoïdale étant en particulier disposé sur le fond de la rainure (47, 47').

4. Procédé de fabrication d'une web (50) pour une pale de rotor (1) d'une éolienne dans un moule (40) selon l'une quelconque des revendications 1 à 3, comprenant les étapes consistant à :
- dans la zone de transition latérale de la racine de pale (18), placer au moins une première couche de fibres (54, 55) contre une paroi latérale (41, 41') du moule, laquelle présente au moins un rainure (47, 47') au fond d'elle,
- mettre en place dans la rainure au moins une deuxième couche de fibres (53) et / ou au moins une deuxième couche d'agencement de fibres en même temps qu'un insert, ladite deuxième couche de fibres (53) et / ou la deuxième couche d'agencement de fibres se prolongeant sensiblement jusqu'au fond de la rainure (47, 47) et étant placée sur une paroi latérale d'un insert (46, 46'), et sur la périphérie (45a, 45a') de la surface de support de la web de l'insert (46, 46') ainsi que sur la surface centrale (45) de support de la web,
- placer un matériau (51) formant le noyau de la web (50) sur la deuxième couche de fibres (53),
- appliquer au moins une troisième couche de fibres (52) et / ou au moins une troisième couche d'agencement de fibres sur le matériau (51) formant le noyau de la traverse (50), où au moins une partie restante de la troisième couche de fibres (52) sur le matériau (51) formant le noyau et / ou la troisième couche d'agencement de fibres étant appliquée vers le haut sur ladite première couche de fibres (54, 55) sur la paroi latérale (41, 41'),
- unir et durcir la web (50) par injection et / ou le durcissement d'une résine ou d'une matière adhésive dans ladite ou lesdites couches de fibres (52 à 55).

5. Procédé selon la revendication 4, **caractérisé en ce qu'**une couche continue de fibres (52, 53) est insérée dans le moule (40) sur la deuxième couche de fibres (53) et / ou la troisième couche de fibres (52), et / ou **en ce qu'**un agencement de couches de fibres est inséré dans le moule (40) en tant que deuxième couche d'agencement de fibres et / ou en tant que troisième couche d'agencement de fibres, et comprend au moins une couche centrale de fibres ainsi qu'une ou plusieurs couches périphériques de fibres, la couche centrale de fibres de l'agencement recouvrant le matériau (51) formant le noyau, la couche de fibres ou les couches de fibres formant dans chaque cas une moitié d'un "T" et la couche fibreuse centrale et / ou le matériau formant le noyau se chevauchant au moins partiellement.

6. Procédé selon la revendication 4 ou la revendication 5, **caractérisé en ce qu'**un espace, dans la zone de la racine de la pale en forme de "T" entre la première couche de fibres (54, 55) et la deuxième ou la troisième couche de fibres (52, 53) ou le deuxième ou troisième agencements de couche de fibres d'une part, et un bord du matériau (51) formant le noyau d'autre part, particulièrement qui est conique ou arrondi, est rempli avec un matériau de remplissage (56, 57), dans lequel, en particulier, il est utilisé un module d'élasticité du matériau de remplissage (56, 57) similaire à un module d'élasticité de l'adhésif ou de la résine.

7. Procédé selon la revendication 6, **caractérisé en ce que** le matériau de remplissage (56, 57) est préfabriqué avant qu'il ne soit inséré dans le moule (40), en particulier à partir de bois, de contreplaqué, de pâte de ciment, avec des fibres courtes d'une résine synthétique et / ou tricoté à partir de fibres longues imprégnées de résine synthétique ou de tresses de fibres longues, ou que l'espace est rempli avec de l'adhésif ou avec de la résine.

8. Procédé selon l'une quelconque des revendications 4 à 7, **caractérisé en ce que** dans la zone latérale des extrémités (19) de la pale de rotor (1), est tout d'abord appliquée au moins une première couche de fibres (53) aux parois latérales (41, 41') et à la surface de support de la web (45'), un matériau (51) formant le noyau de la web (50) est appliqué sur la première couche de fibres (53) et ensuite au moins une deuxième couche de fibres (52) est appliquée sur le matériau (51) formant le noyau et sur les parois latérales (41, 41') sur la première couche de fibres (53).

9. Procédé selon l'une quelconque des revendications 4 à 8, **caractérisé en ce qu'**après le collage et le durcissement de la web (50) dans le moule (40), la web (50) est d'abord retirée du moule (40) avec au moins un insert (46, 46'), puis l'insert (46, 46') est retiré de la web (50).

10. Web (50) pour une pale de rotor (1) d'une installation éolienne, avec une construction en sandwich d'un matériau (51) formant le noyau entouré de couches de fibres (52, 53), la surface de la web étant formée, dans la zone latérale de transition de la racine (18) de pale de la pale de rotor, avec au moins un côté sensiblement en forme de "T" et, dans la zone latérale des extrémités (19) de la pale de rotor (1), avec un côté sensiblement en forme de "L", produit ou fabriqué dans un moule (40) selon l'une quelconque des revendications 1 à 3, en particulier au moyen d'un procédé selon l'une quelconque des revendications 5 à 10.

11. Web (50) selon la revendication 10, **caractérisé en ce que** le matériau (51) formant le noyau, dans la zone de transition latérale de la racine (18) de pale de la pale de rotor, se termine par au moins une face formant un "T" avec le bord conique et / ou arrondi (58, 59) de la web, qui présente en particulier un rayon qui correspond sensiblement à la moitié de l'épaisseur du matériau (51) formant le noyau.

12. Web (50) selon la revendication 11, **caractérisé en ce que** le bord conique et / ou arrondi (58, 59) de la web est entouré par au moins une couche de matériau fibreux, en particulier, le même nombre de couche de fibres et / ou du même type de textile que le matériau (51) formant le noyau.

13. Pale de rotor (1) d'une éolienne comprenant une web (50) selon la revendication 11 ou la revendication 12.

14. Eolienne comprenant une pale de rotor (1) selon la revendication 13.
